# EUROPEAN PATENT APPLICATION

(11) **EP 3 560 757 A1**
(43) Date of publication of application: **30.10.2019**
(21) Application number: 19169694.7
(22) Date of filing: 16.04.2019
(51) Int. Cl.: B60Q 1/00, B60Q 1/26, B60Q 3/14, B60Q 3/64, F21S 43/145, F21S 43/14, F21S 43/15, F21S 43/239, F21S 43/245, F21S 43/20, F21S 41/64

(54) **ILLUMINATION DEVICE FOR A VEHICLE**

(30) Priority: 23.04.2018 JP 2018082249
(71) Applicant: STANLEY ELECTRIC CO., LTD., Tokyo 153-8636 (JP)
(72) Inventor: CHIKAMA, Hiroyuki, Tokyo, 153-8636 (JP); ANO, Koichiro, Tokyo, 153-8636 (JP)
(74) Representative: Emde, Eric

(57) **Abstract**

An illumination device for a vehicle includes: a light source (2) configured to emit a first light (L1) forward; and a transmission type surface emitting device (3) that is disposed in front of the light source (2), that is configured to transmit the first light (L1) and that is configured to emit a second light (L2) forward.

## Description

### BACKGROUND OF THE INVENTION

### Field of the Invention

The present invention relates to an illumination device for a vehicle, a lighting tool for a vehicle including such illumination device for a vehicle, a window panel attached with a lighting tool for a vehicle including such lighting tool for a vehicle, and an on-vehicle display including such illumination device for a vehicle.

### Description of Related Art

In recent years, usage of a surface emitting device configured to emit plane light such as an organic electroluminescence (EL) diode (OLED) or the like in an illumination device for a vehicle has been proposed (for example, see Japanese Unexamined Patent Application, First Publication No. 2015-76294).

For example, Japanese Unexamined Patent Application, First Publication No. 2015-76294 discloses a marker lamp for a vehicle including an organic EL light emitting body that is a light source having a panel-shaped organic EL display element in which a transparent organic emission layer is laminated and integrated between a pair of transparent electrode layers facing each other, disposed in a passenger compartment along a rear window of an automobile and configured to emit light having a predetermined color during electric conduction, color of which is transparent during non-conduction, and a shutter disposed in a passenger compartment in the vicinity of the organic EL light emitting body and having a panel-shaped light shielding section configured to block emission of the organic EL light emitting body toward the passenger compartment, wherein the light shielding section of the shutter has two different aspects of "blocking" and "light transmission" and a driving control unit of the shutter switches the aspects of the light shielding section such that emission (non-emission) of the organic EL light emitting body and blocking (light transmission) of the light shielding section are related to each other.

### SUMMARY OF THE INVENTION

Incidentally, in the invention disclosed in Japanese Unexamined Patent Application, First Publication No. 2015-76294, the driving control unit of the shutter controls switching of the aspects of the light shielding section such that emission (non-emission) of the organic EL light emitting body and blocking (light transmission) of the light shielding section are related to each other.

However, such a configuration is limited to a sign in monochromatic light using only emission of the organic EL light emitting body. In addition, when a plurality of organic EL light emitting bodies are disposed next to each other in a plane for each function lamp such as a tail lamp (including a position lamp) or a brake lamp configured to emit red light, a turn lamp configured to emit orange light, a back lamp configured to emit white light, or the like as a rear combination lamp, it leads to an increase in size of a lighting body.

An aspect of the present invention is directed to providing an illumination device for a vehicle capable of reduction in size and emission with different functions.

In addition, an aspect of the present invention is directed to providing a lighting tool for a vehicle including such illumination device for a vehicle, a window panel attached with a lighting tool for a vehicle including such lighting tool for a vehicle, and an on-vehicle display including such illumination device for a vehicle.

In order to accomplish the above-mentioned objects, the present invention provides the following means.
[1] An illumination device for a vehicle including:
   a light source configured to emit a first light forward; and
   a transmission type surface emitting device that is disposed in front of the light source, that is configured to transmit the first light and that is configured to emit a second light forward.
[2] The illumination device for a vehicle according to [1], wherein the light source is a surface emitting body or a surface emitting device configured to emit plane-shaped light forward.
[3] The illumination device for a vehicle according to [1] or [2], wherein a liquid crystal device is disposed between the light source and the surface emitting device and is configured to selectively allow transmission or blocking of first light from the light source.
[4] The illumination device for a vehicle according to any one of [1] to [3], wherein an emission area divided into a plurality of segments is formed on the surface emitting device,
   a plurality of surface emitting devices configured to emit plane-shaped light forward for each of the emission areas or each of the segments are provided, and
   the plurality of surface emitting devices are disposed to overlap each other when the emission area is seen in a front view.
[5] The illumination device for a vehicle according to [4], wherein the plurality of surface emitting devices are arranged so that at least some of the emission area or the segment overlap other emission areas or segments when the emission area is seen in a front view.
[6] The illumination device for a vehicle according to [4] or [5], wherein the plurality of surface emitting devices are arranged so that at least some of the emission area or the segment do not overlap other emission areas or segments when the emission area is seen in a front view.
[7] A lighting tool for a vehicle including the illumination device for a vehicle according to any one of [1] to [6].
[8] A window panel attached with a lighting tool for a vehicle including the lighting tool for a vehicle according to [7].
[9] An on-vehicle display including the illumination device for a vehicle according to anyone of [1] to [6].

As described above, according to the aspect of the present invention, it is possible to provide an illumination device for a vehicle capable of reduction in size while performing emission with different functions.

In addition, according to the aspect of the present invention, it is possible to provide a lighting tool for a vehicle including such illumination device for a vehicle, a window panel attached with a lighting tool for a vehicle including such lighting tool for a vehicle, and an on-vehicle display including such illumination device for a vehicle.

### BRIEF DESCRIPTION OF THE DRAWINGS

FIG. 1 is a cross-sectional view showing a configuration example of a lighting tool for a vehicle including an illumination device for a vehicle according to a first embodiment of the present invention.
FIG. 2 is a front view showing an example of an emission area included in the lighting tool for a vehicle shown in FIG. 1.
FIG. 3 is a cross-sectional view showing another configuration example of the illumination device for a vehicle shown in FIG. 1.
FIG. 4 is a cross-sectional view showing a configuration example of a lighting tool for a vehicle including an illumination device for a vehicle according to a second embodiment of the present invention.
FIG. 5 is a front view showing an example of an emission area included in the lighting tool for a vehicle shown in FIG. 4.
FIG. 6 is a cross-sectional view showing another configuration example of the illumination device for a vehicle shown in FIG. 4.
FIG. 7 is a front view showing a configuration of a window panel attached with a lighting tool for a vehicle according to a third embodiment of the present invention.
FIG. 8 is a front view showing a configuration of an on-vehicle display according to a fourth embodiment of the present invention.

### DETAILED DESCRIPTION OF THE INVENTION

Hereinafter, embodiments of the present invention will be described in detail with reference to the accompanying drawings.

Further, in the drawings used in the following description, scales of dimensions are shown differently for different to components so that the components can be easily understood, and dimensional ratios or the like of the components may not necessarily be the same as actual ratios.

### (First embodiment)

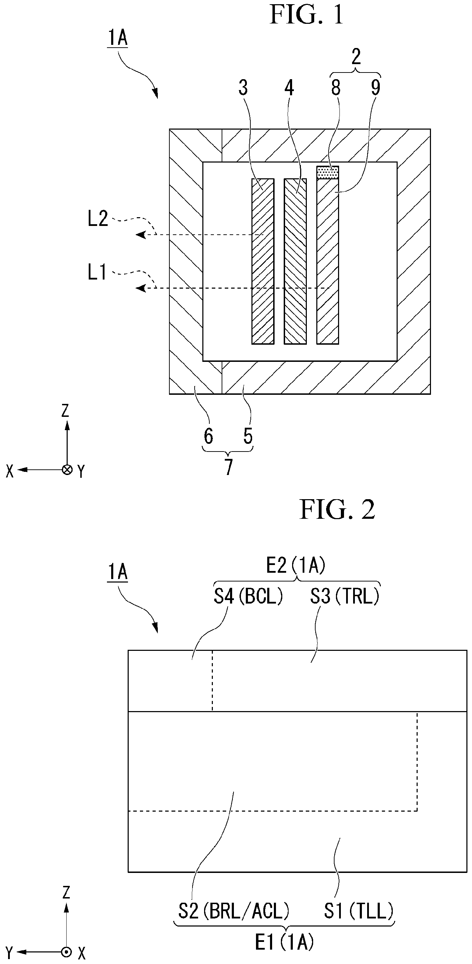

First, as a first embodiment of the present invention, for example, a lighting tool 100A for a vehicle including an illumination device 1A for a vehicle shown in FIG. 1 and FIG. 2 will be described.

Further, FIG. 1 is a cross-sectional view showing a configuration example of the lighting tool 100A for a vehicle including the illumination device 1A for a vehicle. FIG. 2 is a front view showing an example of emission areas E1 and E2 included in the lighting tool 100A for a vehicle.

In addition, in the drawings described below, an XYZ orthogonal coordinate system is set, in which an X-axis direction indicates a longitudinal direction (a lengthwise direction) with respect to the lighting tool 100A for a vehicle, a Y-axis direction indicates a lateral direction (a widthwise direction) with respect to the lighting tool 100A for a vehicle, and a Z-axis direction indicates an vertical direction (a height direction) with respect to the lighting tool 100A for a vehicle.

The lighting tool 100A for a vehicle including the illumination device 1A for a vehicle of the embodiment is obtained by applying the present invention to, for example, a rear combination lamp mounted on both corner sections of a rear end side of a vehicle (not shown).

Further, in the following description, directions of "forward," "rearward," "leftward," "rightward," "upward" and "downward" are the same as directions when the lighting tool 100A for a vehicle is seen from a front surface thereof (a rear side of the vehicle) unless the context clearly indicates otherwise. Accordingly, the directions of forward, rearward, leftward and rightward are reversed when the vehicle is seen from a front surface thereof (a front side of the vehicle).

As shown in FIG. 1, the illumination device 1A for a vehicle of the embodiment includes a light source 2, a transparent type surface emitting device 3 (terminal surface emitting device) disposed in front of the light source 2 and configured to allow first light L1 emitted from the light source 2 to pass therethrough and emit plane-shaped second light L2 forward, and a liquid crystal device (LCD) 4 disposed between the light source 2 and the surface emitting device 3 and configured to selectively allow transmission or blocking of the first light L1 from the light source 2.

The illumination device 1A for a vehicle constitutes the lighting tool 100A for a vehicle by being disposed inside a lighting body 7 constituted by a housing 5 having a front surface that is open and a transparent lens cover 6 configured to cover an opening of the housing 5.

The light source 2 is constituted by, for example, a backlight (a surface emitting body) disposed so as to face a back surface side of the liquid crystal device 4 and configured to emit the plane-shaped first light L1 forward. The light source (backlight) 2 has a light emitting element 8 such as a light emitting diode (LED) or the like and a light guide plate (a light guide body) 9 configured to guide first light L1 emitted from the light emitting element 8, and emits the plane-shaped first light L1 from a front surface side of the light guide plate 9.

The surface emitting device 3 is constituted by, for example, a transparent type organic electroluminescence (EL) panel. The transparent type surface emitting device (organic EL panel) 3 emits second light L2 forward by emitting light from the organic EL element provided on a surface of the transparent substrate having optical transparency.

Further, the surface emitting device 3 may be a segment type configured to control a driving voltage applied between electrodes to emit light from only one segment (organic EL element), or may be a dot matrix type configured to control a driving voltage applied between electrodes of each of dots (organic EL elements) disposed in a matrix and emit light from an arbitrary area.

In addition, when the organic EL panel is used in the surface emitting device 3, since light intensity is low in comparison with the light source 2 using the LED, the surface emitting device 3 is preferably disposed in front of the light source 2. Accordingly, a decrease in light quantity from the surface emitting device can be minimized.

The liquid crystal device 4 is constituted by a transparent type liquid crystal device panel (liquid crystal light bulb).

The liquid crystal device 4 emits the first light L1 passing through the liquid crystal device 4 forward by selectively allowing transmission or blocking of the first light L1 from the light source (backlight) 2 in the surface.

Further, the liquid crystal device 4 may be a segment type configured to control a driving voltage applied between electrodes and switch transmission or blocking of light of only one segment, or may be a dot matrix type configured to control a driving voltage applied between electrodes of each of dots (pixels) disposed in a matrix and switch transmission or blocking of light in an arbitrary area.

In the lighting tool 100A for a vehicle including the illumination device 1A for a vehicle of the embodiment having the above-mentioned configuration, as a first display mode, by making the surface emitting device 3 turned on (ON), the liquid crystal device 4 blocked (OFF) and the light source 2 turned off (OFF), the second light L2 can be emitted forward.

Meanwhile, as a second display mode, by making the surface emitting device 3 turned on (ON), the liquid crystal device 4 transmittable (ON) and the light source 2 turned on (ON), the first light L1 and the second light L2 can be emitted forward.

Meanwhile, as a third display mode, by making the surface emitting device 3 turned off (OFF), the liquid crystal device 4 transmittable (ON) and the light source 2 turned on (ON), the first light L1 can be emitted forward.

Meanwhile, as a fourth display mode, by making the surface emitting device 3 turned off (OFF), the liquid crystal device 4 transmittable (ON) and the light source 2 turned off (OFF), external light or the like can pass through the surface emitting device 3 and the liquid crystal device 4 (the light source 2 side is visible).

As shown in FIG. 2, a first emission area E1 divided into a plurality of (in the embodiment, two) segments S1 and S2, and a second emission area E2 divided into a plurality of (in the embodiment, two) segments S3 and S4 are formed on the surface emitting device 3 of the illumination device 1A for a vehicle by the first light L1 selectively transmitted by the liquid crystal device 4 and the second light L2 emitted from the surface emitting device 3. Each shape of the segment S1, S2 of first emission area E1 and the segment S3, S4 of second emission area E2 is arbitrary formed by, for example, the liquid crystal device 4 that selectively allows transmission or blocking of the first light L1 from the light source (backlight) 2, a controlling of a light emitting area of the surface emitting device 3 so as to correspond to each of the segments S1 to S4, or a formation of an outline of the surface emitting device 3 so as to correspond to each of the segments S1 to S4.

The lighting tool 100A for a vehicle of the embodiment includes the illumination device 1A for a vehicle corresponding to each of the emission areas E1 and E2. In the illumination device 1A for a vehicle, when each of the emission areas E1 and E2 is seen in a front view, the surface emitting device 3, the liquid crystal device 4 and the light source 2 are disposed so as to overlap each other.

In the first emission area E1, when the emission area E1 is seen in a front view, at least some segments of the plurality of segments S1 and S2 are disposed so as to overlap each other. In the embodiment, in the first emission area E1, the segments S1 and S2 overlap each other in a surface such that one of the segments S2 has the other segment S1 disposed at the inside thereof. In the present embodiment, the segment S2 is set so as to correspond to the whole area of the first emission area E1. In addition, in the present embodiment, as shown in Fig. 2, the segment S1 is set in a state in which the segment S1 overlaps with the segment S2 at the L-shaped area in the first emission area E1.

In this case, in the first emission area E1, the one segment S1 may function as a tail lamp (TLL) configured to emit red light (emit weak light) using the second light L2, and the other segment S2 may function as a brake lamp (BRL) configured to emit red light (emit strong light) using the first light L1.

That is, in the first emission area E1, the one segment S1 can be made to function as the tail lamp (TLL) by making the one segment S1 to emit red light (weak light) through the first display mode. Meanwhile, the other segment S2 can be made to function as the brake lamp (BRL) by making the other segment S2 to emit red light (strong light) while the one segment S1 is made to emit red light (weak light) through the second display mode.

Further, in the first emission area E1, the other segment S2 can be made to function as the brake lamp (BRL) or an accessory lamp (ACL) when the other segment S2 is made to emit red light (strong light) through the third display mode.

In the second emission area E2, when the emission area E2 is seen in a front view, at least some segments of the plurality of segments S3 and S4 are disposed not to overlap each other. In the embodiment, in the second emission area E2, one of the segments S3 and the other segment S4 are disposed to be next to each other in the surface.

In this case, in the second emission area E2, the one segment S3 can be made to function as a turn lamp (TRL) configured to emit orange light using the first light L1, and the other segment S4 can be made to function as a back lamp (BCL) configured to emit white light using the second light L2.

That is, in the second emission area E2, by making the one segment S3 to flicker orange light through the first display mode, the one segment S3 can be made to function as the turn lamp (TRL). Meanwhile, by making the other segment S4 to emit white light through the third display mode, the other segment S4 can be made to function as the back lamp (BCL).

As described above, in the lighting tool 100A for a vehicle of the embodiment, emission of different functions becomes possible by using the illumination device 1A for a vehicle, and the illumination device 1A for a vehicle disposed inside the lighting body 7 can be reduced in size.

Further, the present invention is not necessarily limited to the configuration of the first embodiment, and various modifications may be made without departing from the concept of the present invention.

For example, the light source 2 is not limited to the configuration of the backlight obtained by assembling the light emitting element 8 and the light guide plate 9, and may have a configuration in which the light guide plate 9 is omitted and the plurality of light emitting elements 8 are disposed to be arranged around a back surface side of the liquid crystal device 4, or a configuration in which the plurality of light emitting elements 8 are disposed to be arranged on the surface of the back surface side of the liquid crystal device 4.

In addition, in the light source 2, for example, the surface emitting device such as an organic EL panel or the like may also be used instead of the above-mentioned backlight (surface emitting body). The surface emitting device, which is the light source 2, is not limited to the transparent type organic EL panel, and a reflection type organic EL panel may be used.

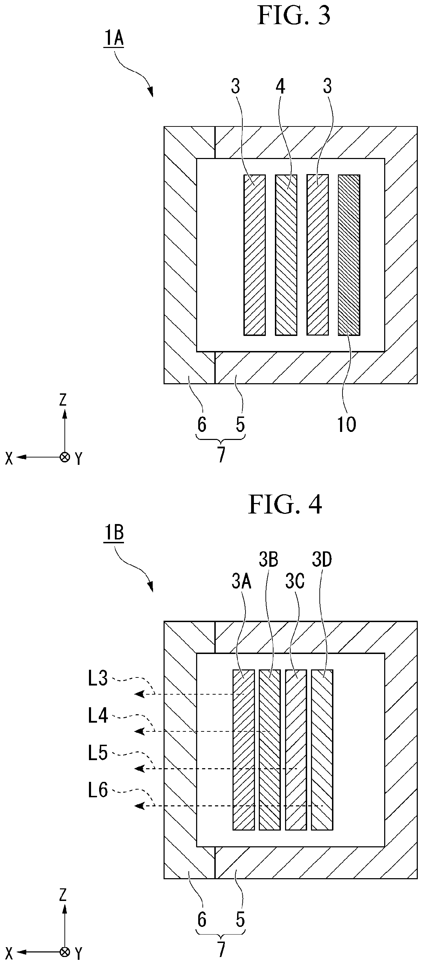

In addition, as shown in FIG. 3, when the transparent type surface emitting device (organic EL panel) 3 is used as the light source 2, a functional part 10 such as a light shielding plate, a reflecting plate, a display body, light source 2, liquid crystal device 4 or the like, can be disposed on the back surface side of the surface emitting device 3.

Among them, when the light shielding plate is disposed as the functional part 10, in the second mode and the third mode, the first light L1 or the second light L2 emitted rearward can be blocked. Meanwhile, in the fourth mode, external light or the like entering through the surface emitting device 3 and the liquid crystal device 4 can be blocked, and the light source 2 side is made as a dark section.

Meanwhile, when the reflecting plate is disposed as the functional part 10, in the second mode and the third mode, the first light L1 or the second light L2 emitted rearward can be reflected forward. Meanwhile, in the fourth mode, external light or the like entering through the surface emitting device 3 and the liquid crystal device 4 can be reflected forward.

Meanwhile, when the display body is disposed as the functional part 10, in the fourth display mode, the display body can be made visible by the external light entering through the surface emitting device 3 and the liquid crystal device 4. As the display body, for example, text, a pattern, an illustration, a mark, a sign, or the like, can be displayed.

Further, the case in which the functional parts 10 are disposed is not necessarily limited to the case in which the transparent type organic EL panel (surface emitting device) 3 is used as the light source 2, and in the fourth display mode, any light source is acceptable as long as the light source 2 can cause the functional part 10 to function.

In addition, the light source 2 is not necessarily limited to the light source configured to emit the plane-shaped first light L1 forward, and may use a light source lamp or the like configured to radially emit the first light L1 forward. In this case, in addition to the above-mentioned LED, the light emitting element 8 such as a laser diode (LD) or the like may be used.

In the first embodiment, while the configuration in which the one segment S1 corresponding to the tail lamp (TLL) and the other segment S2 corresponding to the brake lamp (BRL) are configured to respectively emit light in each of the segments S1 and S2 in the first emission area E1 is provided, a configuration in which the first emission area E1 that functions as the tail lamp (TLL) or the brake lamp (BRL) configured to emit light from the entire surface may be provided.

In addition, in the first embodiment, while the configuration in which the one segment S3 corresponding to the turn lamp (TRL) and the other segment S4 corresponding to the back lamp (BCL) are configured to respectively emit light in each of the segments S3 and S4 in the second emission area E2 is provided, a configuration in which the second emission area E2 that functions as the turn lamp (TRL) or the back lamp (BCL) configured to emit light from the entire surface may be provided.

In addition, while the configuration in which at least some segments and other segments are disposed so as to overlap each other when the emission areas are seen in a front view is provided in the first embodiment, a configuration in which at least some emission areas and other emission areas are disposed so as to overlap each other or a configuration in which at least some emission areas and the segments are disposed so as to overlap each other may be provided.

Meanwhile, while the configuration in which at least some segments and the other segments are disposed not to overlap each other when the emission areas are seen in a front view is provided in the first embodiment, a configuration in which at least some emission areas and the other emission areas are disposed not to overlap each other or a configuration in which at least some emission areas and the segments are disposed not to overlap each other may be provided.

### (Second embodiment)

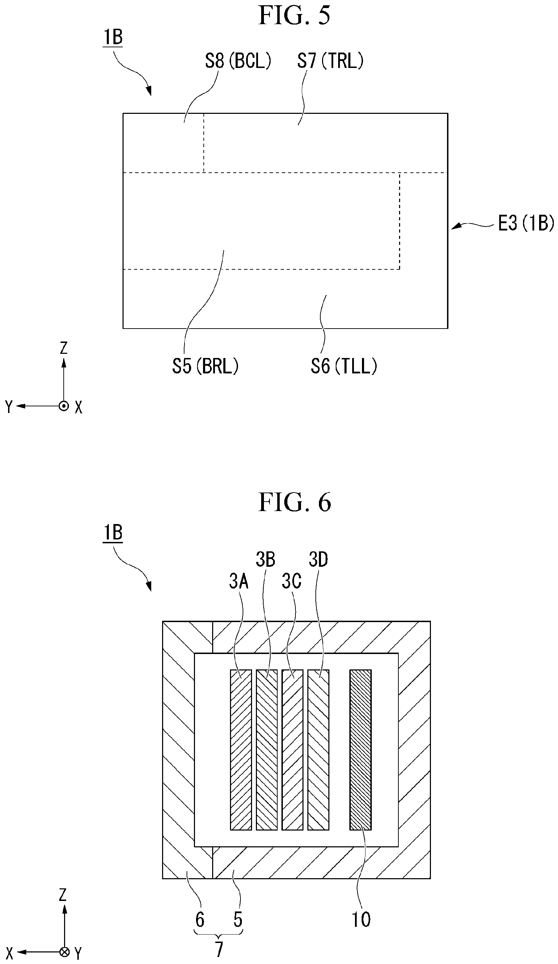

Next, as a second embodiment of the present invention, for example, a lighting tool 100B for a vehicle including an illumination device 1B for a vehicle shown in FIG. 4 and FIG. 5 will be described.

Further, FIG. 4 is a cross-sectional view showing a configuration example of the lighting tool 100B for a vehicle including the illumination device 1B for a vehicle. FIG. 5 is a front view showing an example of an emission area E3 included in the lighting tool 100B for a vehicle. In addition, in the following description, the same components as those of the lighting tool 100A for a vehicle including the illumination device 1A for a vehicle are designated by the same reference numerals in the drawings, and description thereof will be omitted.

As shown in FIG. 4, the illumination device 1B for a vehicle of the embodiment includes a plurality of (in the embodiment, four) surface emitting devices 3A to 3D having optical transparency and configured to emit plane-shaped third light L3 to sixth light L6 forward. Each of the surface emitting devices 3A to 3D can use the same as the surface emitting device 3. In the present embodiment similarly to the first embodiment, among the plurality of surface emitting devices 3A to 3D provided in the illumination device 1B for a vehicle, the surface emitting device 3A provided at most forward side is also referred to as a terminal surface emitting device 3A. In addition, in the present embodiment similarly to the first embodiment, among the light emitted from the plurality of surface emitting devices 3A to 3D provided in the illumination device 1B for a vehicle, light emitted from the terminal surface emitting device 3A is also referred to as a second light L3 and light that are emitted from each of the surface emitting device of a group of the surface emitting devices 3B, 3C, 3D and that transmit the terminal surface emitting device 3A are also referred to as a first light L4, L5, L6, respectively.

The illumination device 1B for a vehicle constitutes the lighting tool 100B for a vehicle when the illumination device 1B for a vehicle is disposed inside the lighting body 7 constituted by the housing 5 having a front surface that is open and the transparent lens cover 6 configured to cover an opening of the housing 5.

As shown in FIG. 5, the emission area E3 that is divided into a plurality of (in the embodiment, four) segments S5 to S8 are formed on the surface emitting device 3A (terminal surface emitting device) of the illumination device 1B for a vehicle. Among the plurality of segments S5 to S8, the emission area E3 has a first segment S5 corresponding to the brake lamp (BRL), a second segment S6 corresponding to the tail lamp (TLL), a third segment S7 corresponding to the turn lamp (TRL), and a fourth segment S8 corresponding to the back lamp (BCL). Each shape of the segments S5 to S8 of the emission area E3 is arbitrary formed by, for example, a controlling of a light emitting area of each of the surface emitting devices 3A to 3D so as to correspond to each of the segments S5 to S8, or a formation of an outline of each of the surface emitting devices 3A to 3D so as to correspond to each of the segments S5 to S8.

In the emission area E3, when the emission area E3 is seen in a front view, at least some segments of the plurality of segments S5 to S8 are disposed so as to overlap each other. In the embodiment, in the emission area E3, the segments S5 and S6 overlap each other in the surface such that the second segment S6 is disposed inside the first segment S5. In the present embodiment, as shown in Fig. 5, the segment S6 is set in a state in which the segment S6 overlaps with the segment S5 at the L-shaped area in the emission area E3. In addition, the segments S7 and S8 overlap each other in the surface such that the fourth segment S8 is disposed inside the third segment S7. In the present embodiment, as shown in Fig. 5, the segment S8 is set in a state in which the segment S8 overlaps with the segment S7 at the left side area of the segment S7 in the emission area E3.

Meanwhile, in the emission area E3, when the emission area E3 is seen in a front view, at least some segments of the plurality of segments S5 to S8 are disposed not to overlap each other. In the embodiment, in the emission area E3, the first and second segments S5 and S6 and the third and fourth segments S7 and S8 are disposed so as to be next to each other in the surface.

In the illumination device 1B for a vehicle, when the emission area E3 is seen in a front view, the plurality of surface emitting devices 3A to 3D are disposed to overlap each other. Specifically, in the illumination device 1B for a vehicle, the first surface emitting device 3A configured to emit red light (emit strong light) from the first segment S5 that serves as the brake lamp (BRL) using the third light L3 (second light), the second surface emitting device 3B configured to emit red light (emit weak light) from the second segment S6 that serves as the tail lamp (TLL) using the fourth light L4 (first light), the third surface emitting device 3C configured to flicker orange light from the third segment S7 that serves as the turn lamp (TRL) using the fifth light L5 (first light), and the fourth surface emitting device 3D configured to emit white light from the fourth segment S8 that serves as the back lamp (BCL) using the sixth light L6 (first light) are arranged sequentially from a front side.

In the embodiment, the reason for disposing the brake lamp (BRL) in front of the tail lamp (TLL) is that visibility of the organic EL element configured to emit red light is relatively lower than that of the light emitting element such as an LED or the like, and the red light is felt darker. Accordingly, in standard of brightness of the lighting tool 100B for a vehicle, the brake lamp (BRL) that requires higher brightness is preferably disposed in front of the tail lamp (TLL).

Meanwhile, since the turn lamp (TRL) configured to emit orange light has high visibility and is brighter than the brake lamp (BRL) or the tail lamp (TLL) configured to emit red light, the turn lamp (TRL) is preferably disposed behind the brake lamp (BRL) and the tail lamp (TLL).

Meanwhile, since the back lamp (BCL) configured to emit white light has high visibility and is brighter than the turn lamp (TRL) configured to emit orange light or the brake lamp (BRL) and the tail lamp (TLL) configured to emit red light, the back lamp (BCL) is preferably disposed behind the turn lamp (TRL), the brake lamp (BRL) and the tail lamp (TLL).

In the illumination device 1B for a vehicle of the embodiment, by making the first surface emitting device 3A turned on (ON), the second surface emitting device 3B turned off (OFF), the third surface emitting device 3C turned off (OFF) and the fourth surface emitting device 3D turned off (OFF), the third light L3 (second light) is emitted forward from the first surface emitting device 3A.

In this case, in the emission area E3, by making the first segment S5 to emit red light (emits strong light) by using the third light L3 (second light), the first segment S5 can be made to function as the brake lamp (BRL).

Meanwhile, in the illumination device 1B for a vehicle of the embodiment, by making the first surface emitting device 3A turned off (OFF), the second surface emitting device 3B turned on (ON), the third surface emitting device 3C turned off (OFF) and the fourth surface emitting device 3D turned off (OFF), the fourth light L4 (first light) is emitted forward from the second surface emitting device 3B.

In this case, in the emission area E3, by making the second segment S6 to emit red light (emits weak light) by using the fourth light L4 (first light), the second segment S6 can be made to function as the tail lamp (TLL).

Meanwhile, in the illumination device 1B for a vehicle of the embodiment, by making the first surface emitting device 3A turned off (OFF), the second surface emitting device 3B turned off (OFF), the third surface emitting device 3C turned on (ON) and the fourth surface emitting device 3D turned off (OFF), the fifth light L5 (first light) is emitted forward from the third surface emitting device 3C.

In this case, in the emission area E3, by making the third segment S7 to flicker orange light by using the fifth light L5 (first light), the third segment S7 can be made to function as the turn lamp (TRL).

Meanwhile, in the illumination device 1B for a vehicle of the embodiment, by making the first surface emitting device 3A turned off (OFF), the second surface emitting device 3B turned off (OFF), the third surface emitting device 3C turned off (OFF) and the fourth surface emitting device 3D turned on (ON), the sixth light L6 (first light) is emitted forward from the fourth surface emitting device 3D.

In this case, in the emission area E3, by making the fourth segment S8 to emit white light by using the sixth light L6 (first light), the fourth segment S8 can be made to function as the back lamp (BCL).

As described above, in the lighting tool 100B for a vehicle of the embodiment, emission of different functions can be performed using the illumination device 1B for a vehicle, and the illumination device 1B for a vehicle disposed inside the lighting body 7 can be reduced in size.

Further, the present invention is not necessarily limited to the configuration of the second embodiment, and various modifications may be made without departing from the scope of the present invention.

For example, as shown in FIG. 6, a configuration in which the functional parts 10 of at least one or more of the light shielding plate, the reflecting plate, the display body, the light source 2 and the liquid crystal device 4, which are above-mentioned, are disposed behind the plurality of surface emitting devices 3A to 3D may be provided.

Among these, when the light shielding plate is disposed as the functional parts 10, the third to sixth lights L3 to L6 emitted rearward can be blocked. In addition, when the plurality of surface emitting devices 3A to 3D are turned off (OFF), external light or the like entering through the plurality of surface emitting devices 3A to 3D can be blocked and the emission area E3 is made as a dark section.

Meanwhile, when the reflecting plate is disposed as the functional parts 10, the third to sixth lights L3 to L6 emitted rearward can be reflected forward. In addition, when the plurality of surface emitting devices 3A to 3D are turned off (OFF), external light or the like entering through the plurality of surface emitting devices 3A to 3D can be reflected forward.

Meanwhile, when the display body is disposed as the functional parts 10, when the plurality of surface emitting devices 3A to 3D are turned off (OFF), the display body can be visually recognized by external light or the like entering through the plurality of surface emitting devices 3A to 3D.

Meanwhile, when the light source 2 is disposed as the functional parts 10, light can be emitted forward from the light source 2. Further, when the liquid crystal device 4 is disposed between the plurality of surface emitting devices 3A to 3D and the light source 2 as the functional parts 10, light from the light source 2 can be selectively transmitted or blocked.

Further, in the second embodiment, while the configuration in which the segment corresponding to each of the function lamps is configured to emit light among the emission area divided into the plurality of segments is provided, a configuration in which the emission area corresponding to each of the function lamps is configured to emit light among the plurality of emission areas may be provided. For example, one emission area corresponding to the brake lamp (BRL), the tail lamp (TLL), the turn lamp (TRL) or the back lamp (BCL) may be configured to emit light through the entire surface thereof.

In addition, when the two or more function lamps are simultaneously turned on, the embodiment is not limited to the configuration in which the segments corresponding to each of the function lamps simultaneously emit light, and a configuration in which the emission areas corresponding to each of the function lamp simultaneously emit light or a configuration in which the emission areas and the segments corresponding to each of the function lamps simultaneously emit light may be provided.

In addition, while the configuration in which at least some segments and other segments are disposed so as to overlap each other when the emission areas are seen in a front view is provided in the second embodiment, a configuration in which at least some emission areas and other emission areas are disposed so as to overlap each other or a configuration in which at least some emission areas and the segments are disposed so as to overlap each other may be provided.

Meanwhile, while the configuration in which at least some segments and the other segments are disposed not to overlap each other when the emission areas are seen in a front view is provided in the second embodiment, a configuration in which at least some emission areas and the other emission areas are disposed not to overlap each other or a configuration in which at least some emission areas and the segments are disposed not to overlap each other may be provided.

### (Third embodiment)

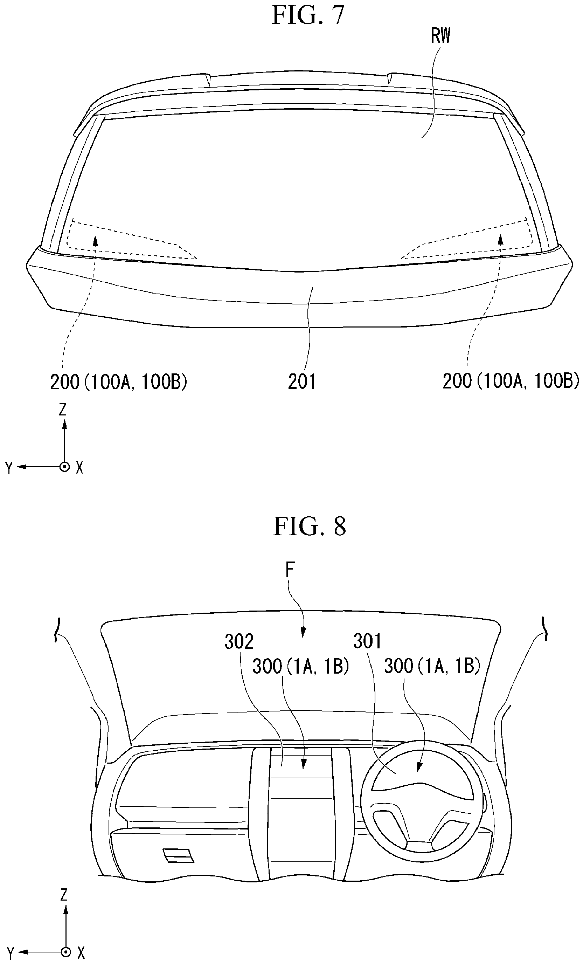

Next, as a third embodiment of the present invention, for example, a window panel 200 attached with the lighting tool for a vehicle shown in FIG. 7 will be described. Further, FIG. 7 is a front view showing a configuration of the window panel 200 attached with the lighting tool for a vehicle.

As shown in FIG. 7, the window panel 200 attached with the lighting tool for a vehicle of the embodiment has, for example, a configuration in which the window panel 200 is formed integrally with a rear panel 201 for a vehicle in a rear section of a vehicle (not shown), or a configuration in which the window panel 200 is integrally attached to the rear panel 201 for a vehicle. In the embodiment, a configuration in which the window panel 200 attached with the lighting tool for a vehicle is integrally attached to the window frame that opens an upper section of the rear panel 201 for a vehicle is provided.

The window panel 200 attached to the lighting tool for a vehicle of the embodiment has a configuration in which the lighting tool 100A (100B) for a vehicle, which becomes rear combination lamps disposed at both of left and right sides of a rear window RW, and the rear window RW are integrated.

In the window panel 200 attached with the lighting tool for a vehicle of the embodiment, the lighting tool 100A (100B) for a vehicle and the rear window RW can be integrated using the lighting tool 100A (100B) for a vehicle that can be reduced in size.

### (Fourth embodiment)

Next, as a fourth embodiment of the present invention, for example, an on-vehicle display 300 shown in FIG. 8 will be described. Further, FIG. 8 is a front view showing a configuration of the on-vehicle display 300.

In the on-vehicle display 300 of the embodiment, as shown in FIG. 8, the illumination device 1A (1B) for a vehicle is applied to a meter panel 301, a console panel 302, or the like, in a passenger compartment F.

In the on-vehicle display 300 of the embodiment, emission of different functions can be performed in the meter panel 301, the console panel 302, or the like, using the illumination device 1A (1B) for a vehicle, and the illumination device 1A (1B) for a vehicle disposed inside the meter panel 301 or the console panel 302 can be reduced in size.

Further, the present invention is not necessarily limited to the embodiment and various modifications may be mode without departing from the scope of the present invention.

For example, while the case in which the present invention is applied to the rear combination lamp has been exemplified in the embodiment, when the rear combination lamp is configured, the rear combination lamp may be combined with another member such as an outer lens, a reflector, an extension, or the like, in addition to the above-mentioned configuration.

In addition, while the case in which the present invention is applied to the rear combination lamp has been exemplified in the embodiment, the lighting tool for a vehicle to which the present invention is applied is not limited to the lighting tool for a vehicle on the rear side, and the present invention may be applied to a lighting tool for a vehicle on a front side. In addition, in the lighting tool for a vehicle to which the present invention is applied, the rear window attached to the lighting tool for a vehicle and the on-vehicle display, shapes or the number of the segments in the emission area, emission colors, or the like, can be appropriately changed according to a design or the like of a vehicle or an inner side of a passenger compartment in actuality. Accordingly, the configurations of the illumination device for a vehicle to which the present invention is applied may be appropriately changed.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. An illumination device for a vehicle comprising:
a light source (2) configured to emit a first light (L1) forward; and
a transmission type surface emitting device (3) that is disposed in front of the light source (2), that is configured to transmit the first light (L1) and that is configured to emit a second light (L2) forward.

2. The illumination device for a vehicle according to claim 1, wherein the light source (2) is a surface emitting body or a surface emitting device (3) configured to emit plane-shaped light forward.

3. The illumination device for a vehicle according to claim 1 or 2, wherein a liquid crystal device (4) is disposed between the light source (2) and the surface emitting device (3) and is configured to selectively allow transmission or blocking of the first light (L1) from the light source (2).

4. The illumination device for a vehicle according to any one of claims 1 to 3, wherein an emission area (E1, E2, E3) divided into a plurality of segments (S1, S2, S3, S4, S5, S6, S7, S8) is formed on the surface emitting device (3, 3A),
a plurality of surface emitting devices (3, 3A, 3B, 3C, 3D) configured to emit plane-shaped light forward for each of the emission areas (E1, E2, E3) or each of the segments (S1, S2, S3, S4, S5, S6, S7, S8) are provided, and
the plurality of surface emitting devices (3, 3A, 3B, 3C, 3D) are disposed to overlap each other when the emission area is seen in a front view.

5. The illumination device for a vehicle according to claim 4, wherein the plurality of surface emitting devices (3, 3A, 3B, 3C, 3D) are arranged so that at least some of the emission area or the segment overlap other emission areas or segments when the emission area is seen in a front view.

6. The illumination device for a vehicle according to claim 4 or 5, wherein the plurality of surface emitting devices (3, 3A, 3B, 3C, 3D) are arranged so that at least some of the emission area or the segment do not overlap other emission areas or segments when the emission area is seen in a front view.

7. A lighting tool for a vehicle comprising the illumination device for a vehicle according to any one of claims 1 to 6.

8. A window panel attached with a lighting tool for a vehicle comprising the lighting tool for a vehicle according to claim 7.

9. An on-vehicle display comprising the illumination device for a vehicle according to any one of claims 1 to 6.
